# EUROPEAN PATENT APPLICATION

(11) **EP 2 053 243 A2**
(43) Date of publication of application: **29.04.2009**
(21) Application number: 07024344.9
(22) Date of filing: 14.12.2007
(51) Int. Cl.: F03G 7/08

(54) **Spring activated energy transducer generating electricity from natural forces - frictionless magnetic plate**

(30) Priority: 26.10.2007 KR 20070108214; 09.11.2007 KR 20070114185
(71) Applicant: Kim, Hyun Bong, Northridge CA 91324 (US); Kim, Yong Ya, Northridge CA 91324 (US); Lee, Michelle, Northridge CA 91324 (US); Kim, Sung Ki, Northridge CA 91324 (US); Kim, Jung Ki, Northridge CA 91324 (US)
(72) Inventor: Kim, Hyun Bong, Northridge CA 91324 (US); Kim, Yong Ya, Northridge CA 91324 (US); Lee, Michelle, Northridge CA 91324 (US); Kim, Sung Ki, Northridge CA 91324 (US); Kim, Jung Ki, Northridge CA 91324 (US)
(74) Representative: Verscht, Thomas Kurt Albert

(57) **Abstract**

A spring activated energy transducer is provided. The energy transducer of the current invention generates alternating current (A/C) electricity from abundant external natural forces. The energy transducer is comprised of an upper part and a lower part. The upper part is comprised of a housing, a helix metal spring, a first circular board, a second circular board, pluralities of magnets embedded to the second circular board, a third circular board with pluralities of magnets facing the magnets embedded in the second circular board with same magnetic pole, an upper metal shaft welded to the third circular board, and four wheel sets rotatably attached to one end of the spring. The lower part is comprised of a housing, a lower metal shaft, a fourth circular board placed on the upper end of the lower part, bundles of electric wire, pluralities of magnets, and a fifth circular board placed at the lower end of the lower part. As the helix metal spring is compressed by an external force, the bundle of electric wire turns between magnets to produce electricity. Direction of the electricity alternates as the helix metal spring oscillates.

## Description

### FIELD OF THE INVENTION

The invention relates to a spring activated energy transducer, more specifically related to an electricity generator powered by external natural forces.

### BACKGROUND OF THE INVENTION

Two major types of electricity power plants are hydraulic power plants and fossil fuel power plants. Nuclear power plants are a kind of fossil fuel power plants. However, all the power plants are huge structures intended for the mass production of electricity. For small scale electricity power generation, such as for small passenger cars, internal combustion engines are the most popular electricity power generator these days. As the oil prices increase every year, attempts have been made to utilize alternative natural energy sources, such as solar energy and wind power, to produce electricity from their unlimited source of natural power. Still, most of these systems are expensive compared to the cost of electricity produced by fossil fuels. There exist other natural forces which have not been considered for generating electricity that needs to be investigated. One of these is the force of wind that causes a tree to bend repeatedly as the wind periodically blows. Another large, untapped natural source of power is the waves of a large body of water. It is the object of the invention to provide a novel electricity generation system that is economical to manufacture and market.

### DESCRIPTION OF THE PRIOR ART

U.S Patent 6,825,574 to Mooring illustrates an electricity generation system that has the ability to generate electrical power by mechanically capturing power of large trees as they sway in the wind. The system utilizes a modular unit that is mounted on a frame assembly covered by a housing. A plurality of spring motors are mounted in a spring motor housing that is journaled on an elongated spring-motor secondary winding axle. That system is too large for conventional family cars.

U.S patent 6,744,145 to Chang illustrates a footwear includes an outsole defining a reference plane, a stand projecting from the outsole and having an inclined upper surface that is inclined relative to the reference plane, a power generator mounted on the outsole and including a rotor, and a driving unit including a weight that has a pivot end mounted pivotally on the inclined upper surface, and a free end opposite to the pivot end. The weight is connected to the rotor, and is swingable by virtue of gravity as a result of swinging of the inclined upper surface of the stand so as to drive the rotor. Electricity generated from that footwear is too small for moving any vehicles.

U.S patent 5,909,784 to Best illustrates a spring motor providing an efficient storage of mechanical energy, translating the potential energy of wound spring to mechanical rotation. The invention includes a frame supporting two gears having peripheral teeth. A first coil spring is positioned about a first shaft and is attached to the first gear and frame. Similarly, a second coil spring is positioned about a second shaft and is attached to the second gear and the frame.

The peripheral teeth of the two gears engage with each other so that rotation of the first gear comes rotation of the second gear. The first and second coil springs are opposingly wound so that potential energy stored in the first coil spring is mechanically transferred, in an oscillation manner, to the second coil spring through rotation of the gears. A chain is attached to the peripheral teeth of the gears so that the chain is linearly displaced as the gears oscillate. Means is provided for transforming the linear displacement of the chain to rotational displacement of the first or second gear.

U.S. Patent 5,880,532 to Stopher illustrates a spring motor utilizing a series arrangement of alternately-wound coiled springs coupled to one another at common ends. The spring motor is coupled to a generator through a gear mechanism to provide a portable and reusable supply of electric power. In addition, the spring motor may be used in a vehicle to recapture wasted energy due to lost momentum during braking. The spring motor is coupled to a winding mechanism for driving the spring motor in response to application of the vehicle's brakes.

### SUMMARY OF THE INVENTION

As the oil price increases every year, attempts have been made to utilize alternative natural energy sources, such as solar energy and wind power, to produce electricity form their unlimited source of natural power. There exist natural forces other than fossil combustion, which have not been utilized for generating electricity. It is object of the invention to provide a novel electricity generation system that is economical to manufacture and market.

A spring activated energy transducer is provided. The energy transducer of the current invention generates current electricity from abundant external natural forces. The energy transducer is comprised of an upper part and a lower part. The upper part is comprised of a housing, a helix metal spring, a first circular board, a second circular board, pluralities of magnets embedded to the second circular board, a third circular board with pluralities of magnets facing the magnets embedded in the second circular board with same magnetic pole, an upper metal shaft welded to the third circular board, four arc shaped springs welded to the second circular board, and four sets of wheels rotatably attached to one end of the spring. The lower part is comprised of a housing, a lower metal shaft, a fourth circular board placed on the upper end of the lower part, bundles of electric wire, pluralities of magnets, and a fifth circular board placed at the lower end of the lower part. As the helix metal spring is compressed by an external force, the bundle of electric wire turns between magnets to produce electricity. Direction of the electricity alternates as the helix metal spring oscillates.

### BRIEF DESCRIPTION OF THE DRAWINGS

FIG. 1 is a schematic diagram showing how many kinds of natural forces can generate electricity with an energy transducer of the first embodiment of the current invention.
FIG. 2 is a perspective view of energy transducer of the first embodiment of the current invention.
FIG. 3-a is a vertical cross-sectional view of the energy transducer of the first embodiment of the current invention along the line A-A' in Fig. 2 and showing the movement of parts when an external force is removed from the main spring.

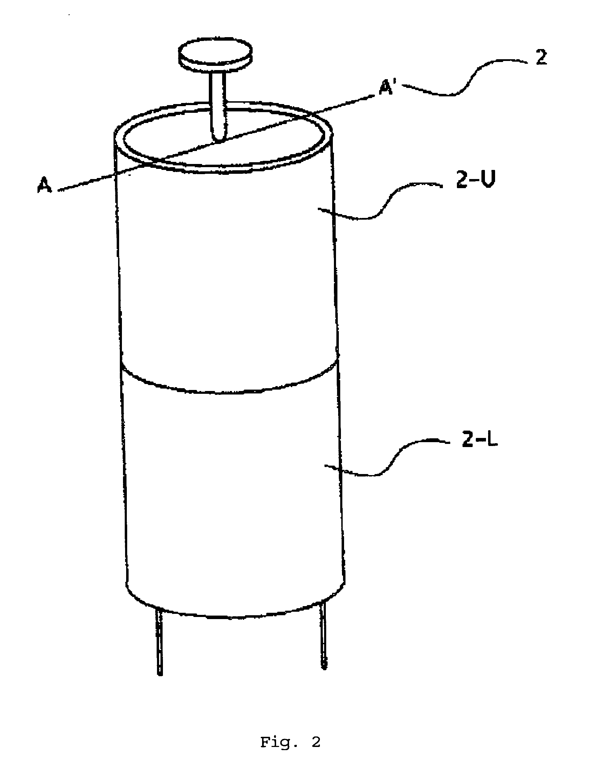

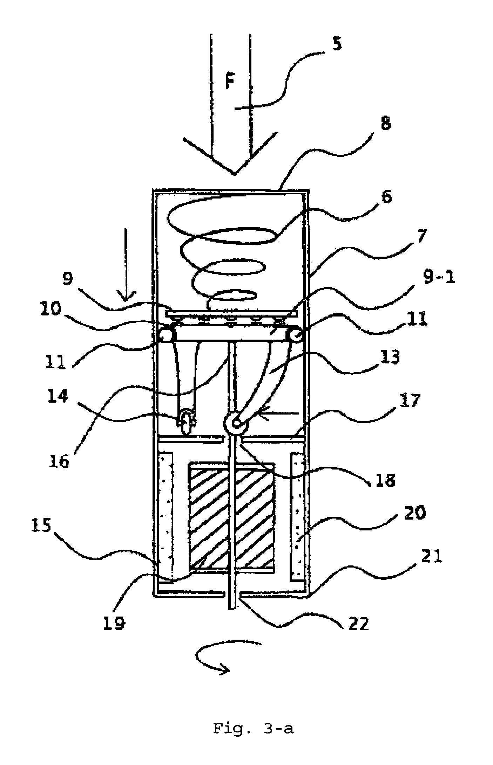

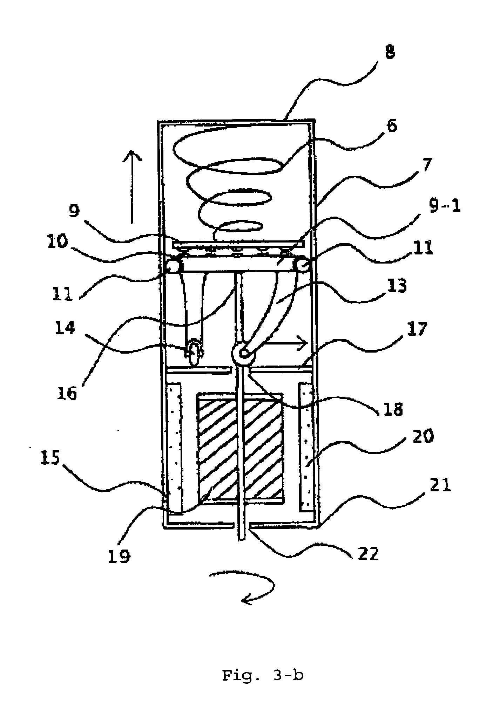

FIG. 3-b is a vertical cross-sectional view of the energy transducer of the first embodiment of the current invention along the line A-A' in Fig. 2 and showing the movement of parts when an external force is removed from the main spring.

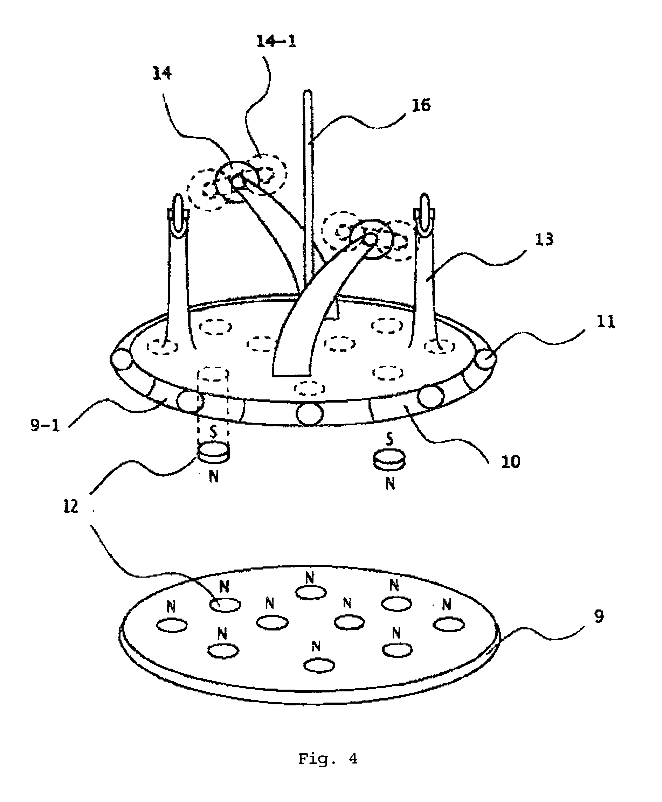

Fig. 4 is a schematic upside-down drawing of the second circular plate, third circular plate, magnets and arc shape springs welded to the third circular plate.

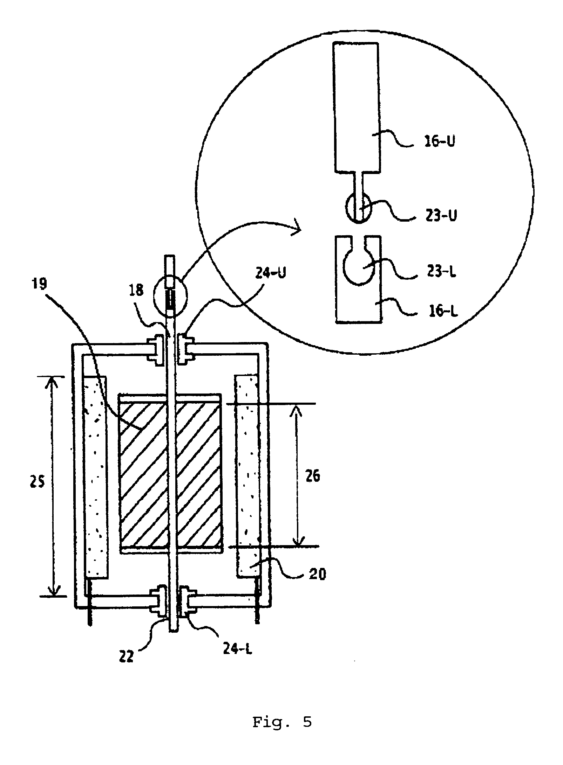

FIG. 5 is a detailed cross-sectional view of the lower part of the energy transducer of the first embodiment of the current invention.

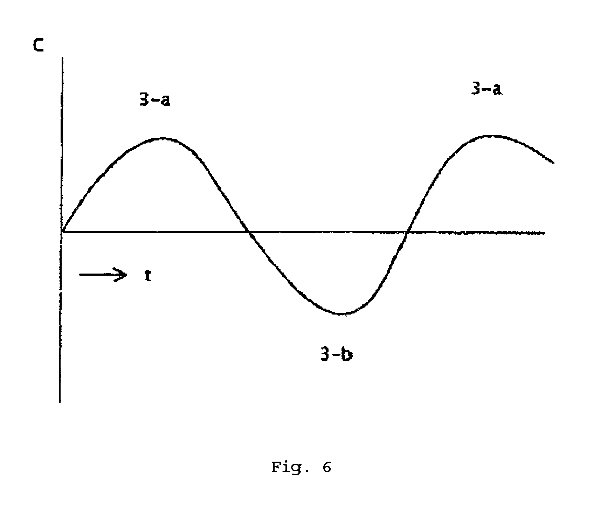

FIG. 6 is a schematic the diagram of the direction of electricity along the motion of the energy transducer.

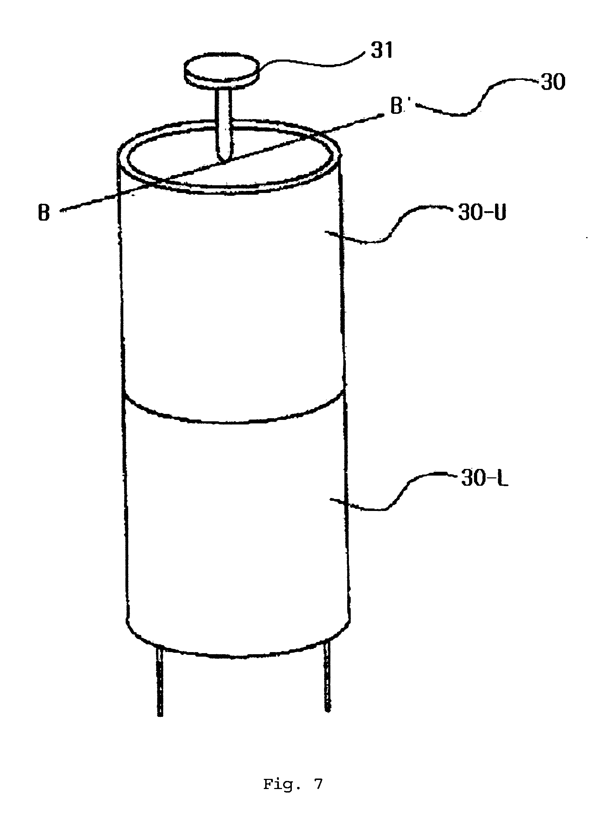

FIG. 7 is a perspective view of an energy transducer according to a second embodiment of the current invention;

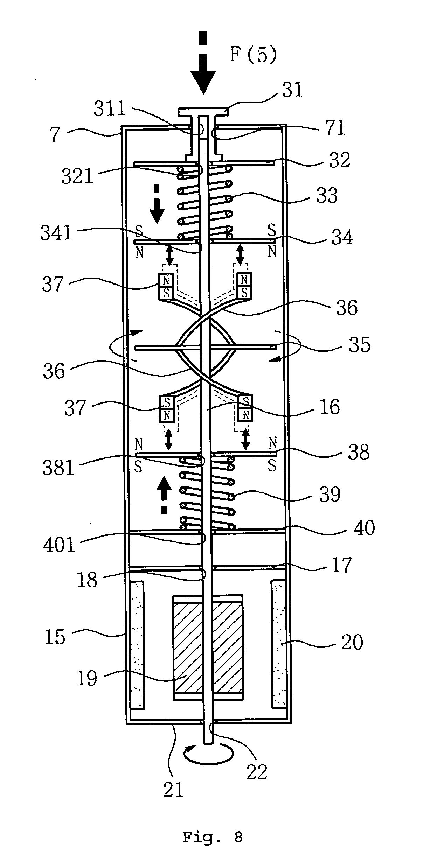

FIG. 8 is a vertical cross-sectional view of the energy transducer of the second embodiment of the current invention, taken along line B-B' of FIG. 7, and showing the movement of parts when an external force is applied to a second metal spring; and

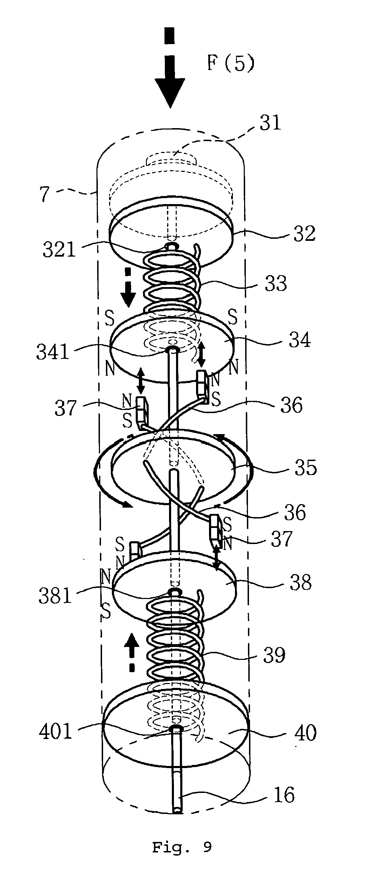

FIG. 9 is a perspective view of the energy transducer of the second embodiment of the current invention shown in FIG. 8, and showing the movement of parts when an external force is applied to the second metal spring.

### DETAILED DESCRIPTION OF THE PREFERRED EMBODIMENTS

A first embodiment of the present invention is described in detail with reference to the accompanying drawings below.

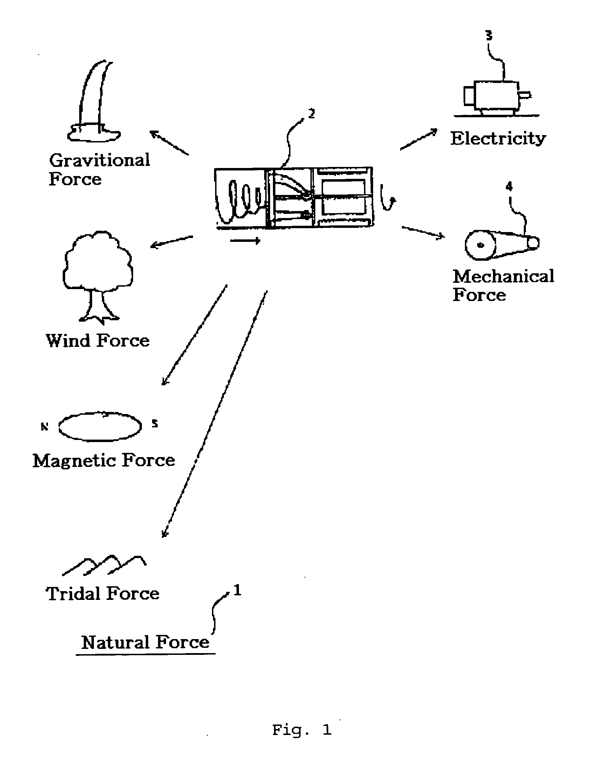

FIG. 1 is a schematic diagram showing how various kind of natural forces (1) generate electricity via an energy transducer (2) of the first embodiment of the current invention. Gravitational forces, wind forces, magnetic forces, and mechanical forces such as tidal forces and animal forces can be transformed into electricity (3) and another mechanical force (4) via the energy transducer (2) of the current invention.

FIG. 2 is a perspective view of energy transducer (2) of the first embodiment of the current invention. The energy transducer (2) is mainly comprised of an upper part (2-U) and a lower part (2-L). FIG. 3-a is a vertical cross-sectional view of the energy transducer (2) of the first embodiment of the current invention along the line A -A' in Fig. 2 and showing the movement of parts when an external force (5) is applied to the main metal spring (6). Fig. 4 is a schematic upside-down drawing of the second circular plate (9), third circular plate (9-1), magnets (12) and arc shape springs (13) welded to the third circular plate (9-1). The upper part (2-U) is comprised of a housing (7), a main metal spring (6) of helix shape, a first circular board (8) placed on the main metal spring (6) a second circular board (9) that is placed between the main metal spring (6) and a third circular board (9-1), which has groove (10) to receive metal bearing balls (11), pluralities of magnets (12) that are embedded to the second circular board (9) and the third circular board (9-1) facing each other with same magnetic pole, a metal shaft (16) welded vertically to the bottom of the third circular board (9-1) at the center thereof, four arc-shaped springs (13) welded to the bottom of the third circular board (9-1) along the outer brim thereof, and four sets of wheels (14), each of which is rotatably attached to one end of the arc shape spring (13) that is opposite of the welded end.

Another embodiment is that four sets (14-1) of wheels can be applied instead of single wheels. Each set is comprised of two wheels of different size. The lower part (2-L) is comprised of a housing (15), a metal shaft (16), a fourth circular board (17) which has a hole (18) for shaft (16) at the center and placed on the upper end of the lower part (2-L), bundles of electric wire (19) fixed to the metal shaft (16), pluralities of magnets (20) attached to the inner wall to the lower part (2-L), and a fifth circular board (21) which has another hole (22) for the shaft (16) at the center and placed at the lower end of the lower part (2-L).

When an external force (5) is applied to the energy transducer (2) of the current invention, the main metal spring (6) is compressed and compresses the second circular plate (9). When the second circular plate (9) is compressed, the arc-shaped springs (13) are distorted due to the force (5). At the same time, the third circular plate (9-1) turns clockwise due to the wheels (14) rotatably attached to one end of the spring (13) that is opposite side of the welded end and the metal bearing balls (11) engaged in the groove (10). Then, the metal shaft (16) rotates the bundle (19) of electric wire clockwise. As the result of bundle (19) of electric wire rotating in the middle of the magnet (20), electricity is generated.

Generated electricity is transferred to other electric instruments, such as an electric motor (3) shown in Fig. 1 through electricity wire (23).

Fig. 3-b is a vertical cross-sectional view of the energy transducer (2) of the current invention along the line A-A' in Fig. 2 and showing the movement of parts when an external force (5) is removed from the main spring. When the external force(5) is removed from the transducer (2), the main metal spring (6) expanded to its original shape and the four arc-shaped springs (13) also return to its original shape and position. This returning force rotates the metal shaft (16) counter-clockwise as the bundle (19) of electric wire also rotates counter-clockwise. Then, the electricity is generated. However, the direction of the electric current is reversed.

FIG. 5 is a detailed cross sectional view of the lower part (2-L) of the energy transducer (2) of the current invention to show connection of the shaft (16) and other parts. The metal shaft (16) is divided into two parts: an upper metal shaft (16-U) and lower metal shaft (16-L). The two parts are engaged into one via a male connector (23-M) and female connector (23-F). The male connector (23-M) is a ribbon spring protruded outward.

Two plastic sleeves (24-U) and (24-L) are placed in the hole (18) developed on the fourth circular board (17) and other hole (22) developed on the fifth circular board (21), respectively. The sleeves (24-U) and (24-L) are made of Teflon ^{®} to make the metal shaft rotates smoothly.

The lower end of the lower metal shaft (16-L) passes through the hole (22) developed on the fifth circular board (21) to allow the whole metal shaft (16) to go downward when an external force (5) is applied to the energy transducer (2).

The height (25) of the magnet (20) is the sum of the height of the (26) of the bundle (19) of electric wire plus the height (27) of the main spring (6). When no external force is applied to the energy transducer (2), the upper end of the bundle (19) of electric wire reaches the upper end of the magnet (20). When the main spring (6) is fully compressed, the lower end of the bundle (19) reaches the lower end of the magnet (20). As a result, the bundle (19) of electric wire rotates alternately as the main spring oscillates by the external force to generate alternating current electricity.

FIG. 6 is a schematic diagram of the direction of electricity along the motion of the energy transducer (2). When an external force (5) starts to apply to the generator (2) of the current invention and the bundle (19) of electric wire turns as shown is Fig. 3-a, electricity starts to generate in one direction. The direction of the current maintains until the main spring (6) reaches its maximum retracted position due to the immediate external force (5). When the external force (5) is removed and the main spring (6) starts to return to the extended position, the metal shaft (16) turns the bundle (19) of the electric wire to the opposite direction. Then the direction of the electricity changed opposite. Repeated oscillation of the helix spring (6) generates an alternation current (A/C).

The energy transducer of the current application can be applied to many systems that need A/C electricity. Alternation rotation of the metal shaft can be directly connected to the other mechanical tools.

A second embodiment of the present invention is described in detail with reference to the accompanying drawings below.

FIG. 7 is a perspective view of an energy transducer 30 of a second embodiment of the current invention. The energy transducer (30) of the second embodiment of the current invention is comprised of an upper part (30-U) and a lower part (30-L).

Since the lower part (30-L) of the energy transducer (30) of the second embodiment of the current invention is the same as the lower part (2-L) of the energy transducer (2) of the first embodiment of the current embodiment, a detailed description thereof is omitted herein.

FIG. 8 is a vertical cross-sectional view of the energy transducer (30) of the second embodiment of the current invention along line B-B' of FIG. 7, and showing the movement of parts when an external force (5) is applied to a second metal spring (33).

Referring to FIG. 8, the upper part (30-U) is comprised of a housing (7), which has an insertion hole (71) into which an external force transmission member (31) is inserted toward the center of the upper part, a metal shaft (16), the external force transmission member (31), which is configured such that a shaft insertion hole (311), into which one end of the metal shaft (16) is inserted, is formed in the center thereof, and such that one surface of the external force transmission member (31), which is arranged in the direction of the shaft insertion hole (311), comes into contact with the upper surface of a sixth circular board (32), a second metal spring (33) having a helix shape, the sixth circular board (32), which is fixedly mounted on the second metal spring (33) and has a sixth circular board through-hole (321), through which the metal shaft (16) passes through the center of the sixth circular board (32), a first magnetic circular board (34), which is placed under the second metal spring (33) and has a first magnetic circular board through-hole (341), through which the metal shaft (16) passes through the center of the first magnetic circular board (34), a seventh circular board (35), which is placed between the first magnetic circular board (34) and the second magnetic circular board (38) and is configured such that the metal shaft (16) is fixed to the center thereof, a second magnetic circular board (38), which is placed below the seventh circular board (35) and has a second magnetic circular board through-hole (381), through which the metal shaft (16) passes through the center of the second magnetic circular board (38), a plurality of second arc-shaped springs (36), which are mounted on the upper and lower surfaces of the seventh circular board (35) and are welded to the bottom of the seventh circular board (35) along the outer brim thereof, a plurality of spring-mounted magnets (37), which have the same polarity as the first and second magnetic circular boards (34, 38) and are mounted to respective arc-shaped springs so as to face them, a third metal spring (39), which is placed under the second magnetic circular board (38), and an eighth circular board (40), which is placed under the third metal spring (39) and has an eighth circular board through-hole (401), through which the metal shaft (16) passes through the center of the eighth circular board (40).

The lower part (30-L) is comprised of a housing (15), the metal shaft (16), a fourth circular board (17), which has a hole (18) for the metal shaft (16) in the center thereof and is placed at the upper end of the lower part (30-L), bundles of electric wire (19), which is fixed to the metal shaft (16), a plurality of magnets (20), which are attached to the inner wall of the lower part (30-L), and a fifth circular board (21) which has another hole (22) for the metal shaft (16) in the center thereof and is placed at the lower end of the lower part (30-L).

Furthermore, the spring-mounted magnets (37), which are mounted over the seventh circular board (35), have the same polarity as the first magnetic circular board (34) and face each other. The spring-mounted magnets (37), which are mounted below the seventh circular board (35), have the same polarity as the second magnetic circular board (38) and face each other.

All of the arc-shaped springs (36) are designed to be bent in a direction identical to the rotational direction of the seventh circular board (35).

Furthermore, it is preferred that the seventh circular board (35) be made of material that is not attracted by a magnet, preferably stainless material.

Furthermore, it is preferred that a waterproof packing be installed around the insertion hole (71) of the housing (7), in which the external force transmission member (31) is mounted. This prevents water from the outside from flowing into the housing (7).

FIG. 9 is a perspective view of the energy transducer (30) of the second embodiment of the current invention, shown in FIG. 8, and showing the movement of parts when an external force is applied to the second metal spring (33).

With reference to FIGS. 8 and 9, when an external force (5) is transmitted to the energy transducer (30) of the second embodiment of the current invention, that is, when an external force (5) is applied to the external force transmission member (31), the transmitted external force (5) is transmitted to the sixth circular board (32), and thus the sixth circular board (32) is pushed forward by the transmitted external force (5). When the sixth circular board (32) is pushed as described above, the second metal spring (33) is compressed.

When the second metal spring (33) is compressed, the first magnetic circular board (34) is pushed forward by the force caused by the compression of the second metal spring (33). When the first magnetic circular board (34) is pushed as described above, the spring-mounted magnets (37), which are mounted to respective second arc-shaped springs (36), which are opposite the first magnetic circular board (34), are repulsed due to the polarity of the first magnetic circular board (34).

Then, the second arc-shaped springs (36), which are opposite the first magnetic circular board (34), are compressed. When the second arc-shaped spring (36) is compressed, the force caused by the compression is applied in the direction in which the second arc-shaped spring (36) is bent, and thus the seventh circular board (35) is pushed in the above-described direction.

At this time, the second arc-shaped spring (36), which is opposite the second magnetic circular board (38), is also repulsed because it has the same polarity as the second magnetic circular board (38).

In this case, the second magnetic circular board (38), which is pushed backward by the repulsive force of the second arc-shaped spring (36), is repulsed again by the third metal spring (39). Furthermore, the third metal spring (39) is repulsed by the eighth circular board (40), which is fixedly mounted in the housing (7).

Then, the second magnetic circular board (38) is repulsed. In this case, the second arc-shaped spring (36), which is opposite the second magnetic circular board (38), is compressed by the repulsive force of the second magnetic circular board (38). When the second arc-shaped spring (36) is compressed, the force caused by the compression is applied in the direction in which the second arc-shaped spring (36) is bent, and thus the seventh circular board (35) is pushed in the above-described direction.

Then, the seventh circular board (35) is pushed in the direction in which the pair of arc-shaped springs (36), placed on the seventh circular board (35), is bent, and is also pushed in the direction in which the pair of arc-shaped springs (36), placed under the seventh circular board (35), is bent, and thus the seventh circular board (35) rotates clockwise when viewed from the top.

Subsequently, when the seventh circular board (35) rotates clockwise, the metal shaft (16), which is welded to the seventh circular board (35), rotates clockwise.

Then, the metal shaft (16) rotates the bundles of wire (19) clockwise.

When the seventh circular board (35), to which the metal shaft (16) is welded, rotates as described above, the metal shaft (16) rotates in the sixth circular board through-hole (321) of the sixth circular board (32), the first magnetic circular board through-hole (341) of the first magnetic circular board (34), the second magnetic circular board through-hole (381) of the second magnetic circular board (38), and the eighth circular board through-hole (401) of the eighth circular board (40).

Then, the bundles of wire (19) rotate in the middle of the magnets (20), thus generating electricity.

The generated electricity is transferred to other electric instruments, such as an electric motor (3), shown in FIG. 1, through an electric wire.

The energy transducer (30) of the second embodiment of the present invention may be applied to various systems that require the use of current. Furthermore, the rotation of the metal shaft (16) can be directly linked to another mechanical tool.

Furthermore, the first magnetic circular board (34) and the second magnetic circular board (38) may be replaced with metal plates having no magnet, wood plates, non-metal plates and the like. The spring-mounted magnets (37) may be replaced with wheels (14), as in the first embodiment.

In this case, electricity may be generated by rotating the seventh circular board (35) based on the same principle as in the first embodiment.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

The invention may be summarized as follows:

A spring activated energy transducer is provided. The energy transducer of the current invention generates alternating current (A/C) electricity from abundant external natural forces. The energy transducer is comprised of an upper part and a lower part. The upper part is comprised of a housing, a helix metal spring, a first circular board, a second circular board, pluralities of magnets embedded to the second circular board, a third circular board with pluralities of magnets facing the magnets embedded in the second circular board with same magnetic pole, an upper metal shaft welded to the third circular board, and four wheel sets rotatably attached to one end of the spring. The lower part is comprised of a housing, a lower metal shaft, a fourth circular board placed on the upper end of the lower part, bundles of electric wire, pluralities of magnets, and a fifth circular board placed at the lower end of the lower part. As the helix metal spring is compressed by an external force, the bundle of electric wire turns between magnets to produce electricity. Direction of the electricity alternates as the helix metal spring oscillates.

## Claims

1. A spring activated energy transducer generating electricity from natural force is comprised of:
an upper part that is comprised of;
a housing, and
a main metal spring of helix shape, and
a first circular board placed on the main metal spring, and
a second circular board that is placed under the main metal spring, and
pluralities of magnets embedded to the bottom of the second circular board, and
a third circular board that has groove to receive metal bearing balls, and
pluralities of magnets embedded to the upper face of the third circular board facing the magnets embedded to the bottom of the second circular board with same magnetic pole, and
a metal shaft welded vertically to the bottom of the third circular board at the center thereof, and
four arc-shaped springs welded to the bottom of the third circular board along the outer brim thereof, and
four sets of wheels, each of which is rotatably attached to one end of the spring that is opposite of the welded end:
and
a lower part that is comprised of;
a housing, and
a metal shaft, and
a fourth circular board which has a hole for shaft at the center and placed on the upper end of the lower part, and
bundles of electric wire fixed to the metal shaft, and
pluralities of magnets attached to the inner wall of the lower part, and
a fifth circular board which has another hole for the shaft at the center and placed at the lower end of lower part.

2. A spring activated energy transducer generating electricity from natural force of claim 1, wherein bundle of electric wire rotates alternately as the main spring oscillates by the external force to generate alternating current electricity.

3. A spring activated energy transducer generating electricity from natural force of claim 1 or 2, wherein four sets of wheels, each of which is comprised of two wheels of different sizes, is attached to each of the four arc-shaped springs.

4. A spring activated energy transducer generating electricity from natural force comprising:
an upper part that is comprised of:
a housing,
a metal shaft,
a first metal spring having a helix shape,
a first circular board that is fixedly mounted on the first metal spring and is configured such that the metal shaft passes through a center thereof,
a first magnetic circular board that is placed under the first metal spring and is configured such that the metal shaft passes through a center thereof,
a second circular board that is placed between the first magnetic circular board and a second magnetic circular board and is configured such that the metal shaft is fixed to a center thereof,
the second magnetic circular board that is placed below the second circular board and is configured such that the metal shaft passes through a center thereof,
a plurality of second arc-shaped springs that is mounted on upper and lower surfaces of the second circular board and is welded to a bottom of the second circular board along an outer brim thereof,
a plurality of spring-mounted magnets that are configured to have polarity identical to that of the first magnetic circular board and the second magnetic circular board and are mounted to respective arc-shaped springs so as to face each other,
a second metal spring that is placed below the second magnetic circular board, and
a third circular board that is mounted under the second metal spring and has a circular board through-hole through which the metal shaft passes through a center of the third circular board; and
a lower part that is comprised of;
a housing,
the metal shaft,
a fourth circular board that has a hole for the metal shaft in a center thereof and is placed at an upper end of the lower part,
bundles of wire that are fixed to the metal shaft,
a plurality of magnets that are attached to an inner wall of the lower part, and
a fifth circular board that has another hole for the metal shaft in a center thereof and is placed at a lower end of the lower part.

5. The spring activated energy transducer of claim 4, wherein the bundles of wire rotate alternately as the first metal spring is oscillated by an external force, thus generating alternating current.

6. The spring activated energy transducer of claim 4 or 5, wherein the spring-mounted magnets, which are mounted over the second circular board, have polarity identical to the first magnetic circular board and face each other, and spring-mounted magnets, which are mounted under the second circular board, have polarity identical to the second magnetic circular board and face each other.
